# DEMANDE DE BREVET EUROPEEN

(11) **EP 2 623 814 A1**
(43) Date de publication de la demande: **07.08.2013**
(21) Numéro de dépôt: 13151214.7
(22) Date de dépôt: 14.01.2013
(51) Int. Cl.: F16D 23/14

(54) **Butée d'embrayage de véhicule automobile**

(30) Priorité: 31.01.2012 FR 1250906
(71) Demandeur: NTN-SNR Roulements, 74000 Annecy (FR)
(72) Inventeur: Mermoud, Gérard, 74330 La Balme de Sillingy (FR)
(74) Mandataire: Sayettat, Julien Christian

(57) **Abrégé**

L'invention concerne une butée d'embrayage de véhicule automobile comprenant une bague tournante (1), une bague fixe (2) et une bague d'actionnement (7) qui présente une portée annulaire radiale d'actionnement (7a) qui est agencée pour permettre sa mise en appui axial sur le diaphragme de l'embrayage, la bague tournante (1) présentant une portée annulaire avant (1a) par rapport à laquelle la bague d'actionnement (7) est montée en permettant un rotulage, ladite butée comprenant un anneau (13) interposé entre la portée d'actionnement (7a) et la portée avant (1a), ledit anneau présentant des zones avant (13a) en appui sur la portée d'actionnement (7a), lesdites zones avant d'appui étant agencées pour permettre un basculement de la portée d'actionnement (7a) par rapport à l'anneau (13) dans un premier plan axial (P1), ledit anneau présentant également des zones arrière (13b) en appui sur la portée avant (1a), lesdites zones arrière d'appui étant agencées pour permettre un basculement de l'anneau (13) par rapport à la portée avant (1a) dans un deuxième plan axial (P2) qui est perpendiculaire au premier plan (P1).

## Description

L'invention concerne une butée d'embrayage de véhicule automobile, ladite butée comprenant une bague tournante et une bague fixe pourvues chacune d'une piste de roulement formant entre elles un chemin de roulement à contact oblique dans lequel des corps roulants sont disposés pour guider la rotation de ladite bague tournante.

L'invention concerne également un système d'actionnement de l'embrayage d'un véhicule automobile comprenant une telle butée et un dispositif de déplacement axial de ladite butée relativement au diaphragme de l'embrayage.

Pour assurer l'actionnement de l'embrayage, la bague tournante est solidaire en rotation d'une portée d'actionnement, la butée étant déplaçable entre une position d'embrayage dans laquelle ladite portée d'actionnement est disposée contre le diaphragme et une position de débrayage dans laquelle ladite portée d'actionnement appuie sur ledit diaphragme.

Toutefois, une liaison rigide entre la portée d'actionnement et la bague fixe induit un risque de déclipsage de la butée en cas de désalignement entre la butée et le diaphragme.

En outre, du fait d'un défaut possible de parallélisme entre la face d'appui du diaphragme et la face d'appui de la portée d'actionnement, des vibrations et des oscillations sont transmises depuis le diaphragme au dispositif de déplacement par l'intermédiaire de la butée, ce qui peut conduire à une usure prématurée dudit dispositif, notamment au niveau des joints du piston hydraulique assurant le déplacement axial. En outre, ces vibrations peuvent être ressenties par les passagers du véhicule automobile.

Enfin, l'appui exercé entre la portée d'actionnement et le diaphragme peut être source d'usure et de bruits, ce qu'il convient également d'éviter.

Pour résoudre ces problèmes, on connaît l'utilisation de butées d'embrayage dans lesquelles la portée d'actionnement est montée par rapport au dispositif de déplacement avec une possibilité de rotulage.

Le document FR-2 916 502 enseigne l'utilisation d'une bague d'actionnement rotulante par rapport à une bague tournante, ladite bague d'actionnement présentant une portée annulaire radiale d'actionnement qui est agencée pour permettre sa mise en appui axial sur le diaphragme de l'embrayage afin d'actionner ledit diaphragme par l'intermédiaire de ladite bague d'actionnement.

En particulier, le rotulage est obtenu en prévoyant des profils complémentaires sur la bague d'actionnement et sur la bague tournante, un insert de glissement pouvant être interposé entre lesdits profils. Toutefois, la réalisation de ces profils s'avère contraignante en ce qu'elle nécessite de modifier la conception de la butée au niveau de la géométrie des bagues.

En outre, avant la disposition de la butée dans le système d'actionnement de l'embrayage du véhicule automobile, cette réalisation ne permet pas d'assurer de façon satisfaisante le maintien de la bague d'actionnement sur la bague tournante puisque ladite bague d'actionnement peut rotuler librement.

L'invention vise à résoudre les problèmes de l'art antérieur en proposant notamment une butée d'embrayage présentant une bague d'actionnement rotulante dont le montage sur la bague tournante est peu contraignant relativement à la conception de la butée, et ce en assurant le maintien de ladite bague d'actionnement avant la disposition de la butée dans le système d'actionnement.

A cet effet, et selon un premier aspect, l'invention propose une butée d'embrayage de véhicule automobile comprenant une bague tournante et une bague fixe pourvues chacune d'une piste de roulement formant entre elles un chemin de roulement à contact oblique dans lequel des corps roulants sont disposés pour guider la rotation de ladite bague tournante, ladite butée comprenant en outre une bague d'actionnement qui présente une portée annulaire radiale d'actionnement qui est agencée pour permettre sa mise en appui axial sur le diaphragme de l'embrayage afin d'actionner ledit diaphragme par l'intermédiaire de ladite bague d'actionnement, la bague tournante présentant une portée annulaire avant par rapport à laquelle la bague d'actionnement est montée en permettant un rotulage de ladite portée d'actionnement par rapport à ladite portée avant, ladite butée comprenant un anneau interposé entre la portée d'actionnement et la portée avant, ledit anneau présentant des zones avant en appui sur la portée d'actionnement, lesdites zones avant d'appui étant agencées pour permettre un basculement de la portée d'actionnement par rapport à l'anneau dans un premier plan axial, ledit anneau présentant également des zones arrière en appui sur la portée avant, lesdites zones arrière d'appui étant agencées pour permettre un basculement de l'anneau par rapport à la portée avant dans un deuxième plan axial qui est perpendiculaire au premier plan, afin de permettre un rotulage de la bague d'actionnement par rapport à la bague tournante lors de la mise en appui de la portée d'actionnement sur le diaphragme.

Selon un deuxième aspect, l'invention propose un système d'actionnement de l'embrayage d'un véhicule automobile comprenant un diaphragme, ledit système comprenant une telle butée et un dispositif de déplacement axial de ladite butée entre une position d'embrayage dans laquelle la portée d'actionnement est disposée contre le diaphragme et une position de débrayage dans laquelle ladite portée d'actionnement appuie sur ledit diaphragme.

D'autres objets et avantages de l'invention apparaîtront dans la description qui suit, faite en référence aux figures annexées, dans lesquelles :
- la figure 1 est une représentation en vue de côté d'une butée d'embrayage selon un mode de réalisation de l'invention ;
- les figures 2 sont des représentations en coupe longitudinale de la butée d'embrayage de la figure 1, respectivement en position alignée (figure 2a) et en position rotulée (figure 2b) ;
- la figure 3 est une représentation en coupe longitudinale d'une butée d'embrayage selon un autre mode de réalisation de l'invention ;
- la figure 4 est une représentation éclatée de la butée d'embrayage de la figure 1 ;
- la figure 5 est une représentation éclatée de la butée d'embrayage de la figure 3 ;
- la figure 6 est une représentation en coupe longitudinale d'une butée d'embrayage selon une variante de réalisation de la figure 2a, la figure 6a représentant en perspective la bague d'actionnement de cette variante ;
- la figure 7 est une représentation en perspective d'une bague d'actionnement selon une autre réalisation de l'invention.

En relation avec les figures, on décrit ci-dessous une butée d'embrayage de véhicule automobile qui est destinée à être intégrée dans un système d'actionnement de l'embrayage d'un véhicule automobile comprenant un diaphragme (non représenté).

Dans une telle réalisation, le débrayage est réalisé par appui sur le diaphragme par l'intermédiaire de la butée. Pour ce faire, le système d'actionnement comprend un dispositif de déplacement axial (non représenté) de la butée entre une position d'embrayage et la position de débrayage.

La butée d'embrayage comprend une bague tournante 1 et une bague fixe 2 pourvues chacune d'une piste de roulement formant entre elles un chemin de roulement à contact oblique dans le sens d'application de l'effort de déplacement de la butée en position de débrayage. Des corps roulants formés de billes 3 sont disposés dans le chemin de roulement pour guider la rotation de la bague tournante 1 et transmettre les efforts exercés sur chacune des bagues 1,2.

En particulier, les billes 3 sont disposées à l'intérieur d'une cage de rétention 4 qui peut comprendre des moyens formant déflecteur au niveau d'un côté du chemin de roulement afin de limiter les fuites de lubrifiant présent dans le chemin de roulement ainsi que la contamination dudit chemin avec des polluants extérieurs. En variante, un déflecteur rapporté 5 peut être disposé entre les bagues 1, 2.

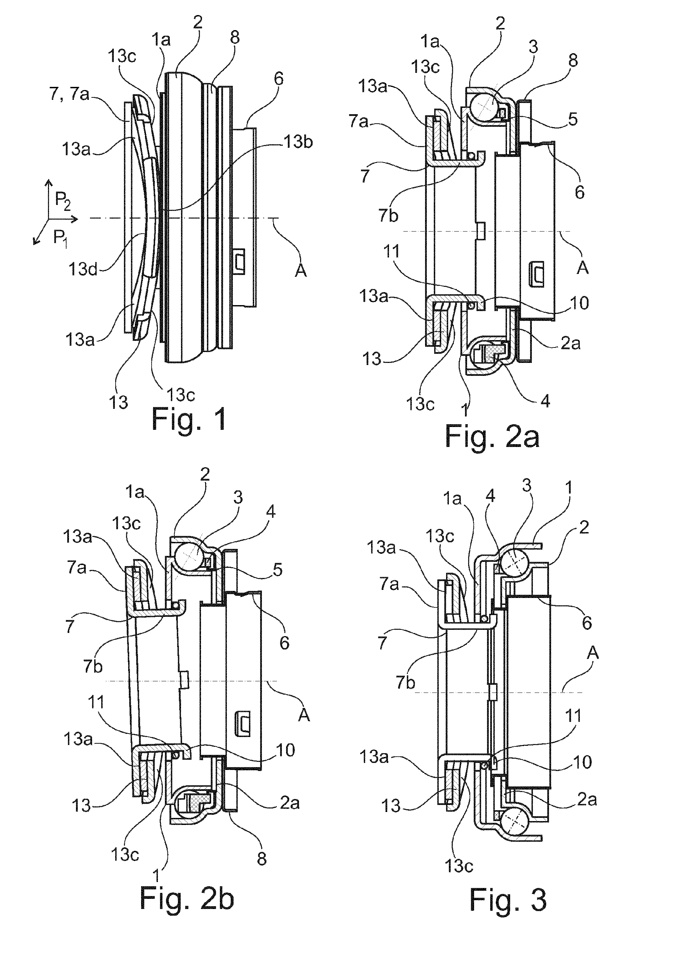

Dans le mode de réalisation représenté sur les figures 1 et 2, la bague intérieure 1 est tournante dans une bague extérieure 2 qui est fixe en rotation, lesdites bagues étant réalisées en tôle emboutie pour présenter chacune une piste de roulement. La figure 3 représente la configuration inverse, c'est-à-dire une bague extérieure 1 tournante autour d'une bague intérieure 2 fixe.

Dans cette description, les termes de positionnement dans l'espace sont pris en référence à l'axe A de rotation de la bague tournante 1. En particulier, le terme « intérieur » est relatif à une disposition proche de cet axe A et le terme « extérieur » est relatif à une disposition à distance de cet axe A. Par ailleurs, les termes « avant » et « arrière » sont relatifs à une disposition par rapport au sens de déplacement de la butée vers la position de débrayage, à savoir à gauche sur les figures 1 à 3 pour « avant » et à droite pour « arrière ».

La bague 2 fixe en rotation est destinée à être déplacée en translation axiale par l'intermédiaire d'un piston hydraulique du dispositif de déplacement. Pour ce faire, la bague fixe 2 est disposée autour d'un manchon 6 de montage sur le dispositif de déplacement axial, par exemple sur la tige d'un piston, ou en coulissement sur un arbre du système d'actionnement.

La bague fixe 2 comprend une portée radiale 2a qui est en appui axial sur le manchon 6, ledit appui pouvant être contraint par l'intermédiaire d'une rondelle d'autocentrage qui est apte à générer un effort d'autocentrage entre le manchon 6 et la butée, par exemple une rondelle élastique de type Belleville ou une rondelle comprenant une pluralité d'ondes axiales.

La butée comprend une bague d'actionnement 7 qui présente une portée annulaire radiale 7a d'actionnement qui est agencée pour permettre sa mise en appui axial sur le diaphragme de l'embrayage afin d'actionner ledit diaphragme par l'intermédiaire de ladite bague d'actionnement. Ainsi, en position d'embrayage, la portée d'actionnement 7a peut être disposée contre le diaphragme sans exercer un effort d'appui pour le débrayage et, en position de débrayage, la portée 7a appuie sur ledit diaphragme.

En particulier, le manchon 6 comprend une couronne 8 d'appui d'un moyen de précontrainte, par exemple formé d'un ressort (non représenté), exerçant un effort axial de précharge sur la butée de sorte que la portée d'actionnement 7a en position d'embrayage soit disposée contre le diaphragme. En outre, on peut prévoir d'équiper la portée d'actionnement 7a avec un disque d'appui sur le diaphragme, ledit disque étant réalisé en un matériau optimisant l'usure et réduisant le frottement.

La bague tournante 1 présente une portée annulaire avant 1 a par rapport à laquelle la bague d'actionnement 7 est montée en permettant un rotulage de la portée d'actionnement 7a par rapport à ladite portée avant. Dans les modes de réalisation représentés, la portée avant 1a s'étend radialement en délimitant un alésage 9 dans lequel une portée annulaire axiale 7b de la bague d'actionnement 7 est montée, le diamètre de l'alésage 9 étant supérieur au diamètre extérieur de ladite portée axiale pour permettre le rotulage de la portée d'actionnement 7a par rapport à la portée avant 1 a.

En particulier, cette différence de diamètre peut être suffisante pour permettre le basculement de la bague d'actionnement 7 par rapport à la bague tournante 1, notamment sur une course angulaire de l'ordre de 5°, de sorte à ajuster la position de l'axe de la bague d'actionnement 7 par rapport à celui de la bague tournante 1.

Ainsi, lors du déplacement axial de la butée en position de débrayage, la portée d'actionnement 7a appuie sur le diaphragme avec possibilité pour la bague d'actionnement 7 de rotuler par rapport à la bague tournante 1 de sorte à compenser les éventuels désalignements entre la butée et le diaphragme.

En outre, la possibilité de rotulage de la bague d'actionnement 7 permet une filtration des efforts transmis par l'intermédiaire de la butée, notamment des vibrations et des oscillations potentiellement endommageantes pour le dispositif de déplacement. En outre, sur la course de rotulage, les efforts sont amortis, notamment relativement aux chocs entre la portée d'actionnement 7a et le diaphragme.

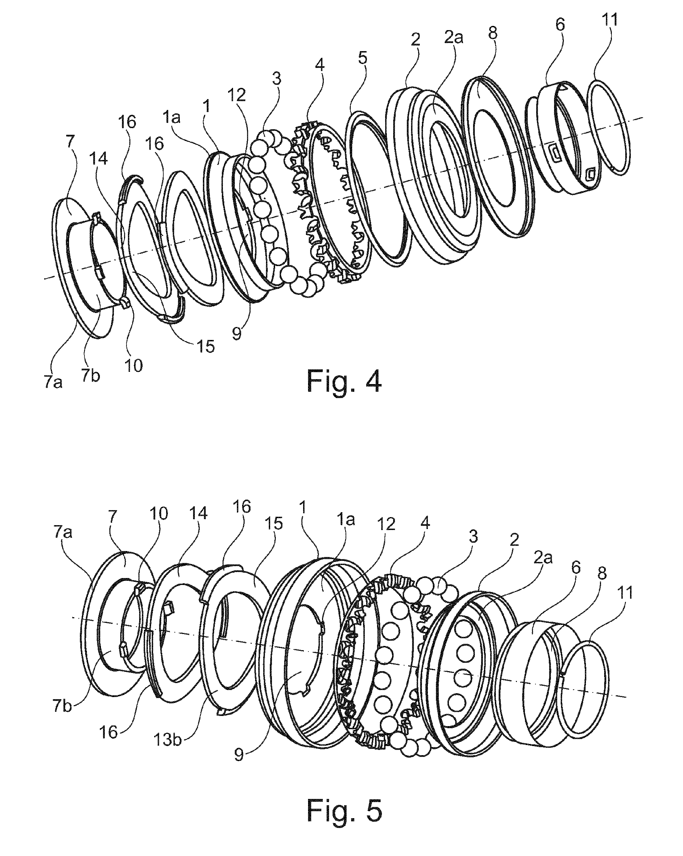

L'extrémité arrière de la portée axiale 7b présente des crochets extérieurs 10 de montage de la bague d'actionnement 7 dans l'alésage 9. Selon les figures 1 à 5 un jonc 11 est interposé entre les crochets 10 et la portée avant 1a pour empêcher le démontage de la bague d'actionnement 7. En outre, l'alésage 9 de la portée avant 1 a présente des encoches 12 correspondantes aux crochets 10 pour permettre le montage de la bague d'actionnement 7 par passage desdits crochets au travers desdites encoches.

Ainsi, par déplacement axial de la bague d'actionnement 7 dans l'alésage 9, on dispose les crochets 10 derrière les encoches 12 puis on dispose le jonc 11 autour de la portée axiale 7b en l'interposant entre les crochets 10 et l'arrière de la portée avant 1a. Cette réalisation empêche le retrait de la bague d'actionnement 7 tout en permettant le rotulage de ladite bague d'actionnement dans l'alésage 9. En particulier, on assure donc, avant la disposition de la butée dans le système d'actionnement, un maintien de la bague d'actionnement 7 par rapport à la bague tournante 1.

La butée comprend un anneau 13 qui est interposé entre la portée d'actionnement 7a et la portée avant 1 a. En particulier, un jeu annulaire axial est formé entre la portée d'actionnement 7a et la portée avant 1a, l'anneau 13 étant disposé dans ledit jeu axial.

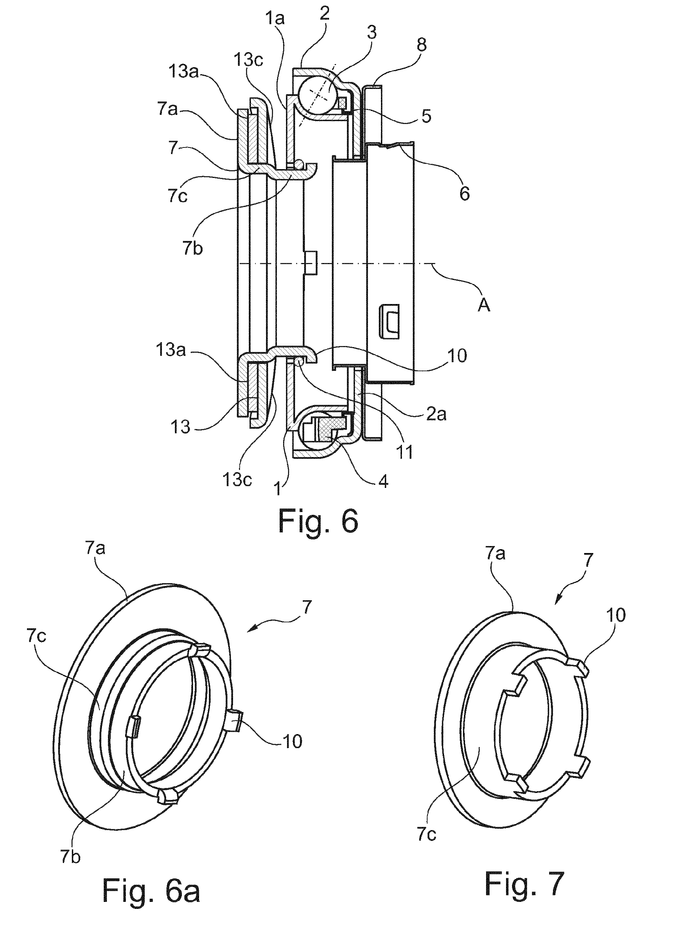

Selon la variante des figures 6, la portée axiale 7b présente un épaulement 7c de centrage de l'anneau 13, ledit épaulement étant adjacent à la portée d'actionnement 7a. En particulier, l'épaulement 7c présente un diamètre extérieur qui est supérieur ou égal au diamètre dans lequel les crochets 10 sont inscrits, ledit diamètre extérieur de l'épaulement 7c étant en outre sensiblement égal au diamètre de l'alésage de l'anneau 13. Ainsi, le jeu entre l'anneau 13 et la portée axiale 7b peut être réduit pour maintenir ledit anneau en position centrée sur la bague d'actionnement 7, tout en permettant le montage dudit anneau sur ladite portée axiale.

Selon la réalisation de la figure 7, les crochets 10 sont disposés dans le prolongement axial de la portée axiale 7b pour être rabattus derrière la portée avant 1a après montage de l'ensemble bague d'actionnement 7 - anneau 13 sur la bague tournante 1. Ainsi, la portée avant 1a peut être dépourvue d'encoche 12 et le centrage de l'anneau 13 est assuré en prévoyant un diamètre analogue entre la portée axiale 7b et l'alésage de l'anneau 13. En outre, dans cette réalisation, la butée peut être dépourvue de jonc 11.

L'anneau 13 présente des zones avant 13a en appui sur la portée d'actionnement 7a et des zones arrière 13b en appui sur la portée avant 1a. Les zones d'appui 13a, 13b sont agencées pour permettre l'entraînement en rotation de la bague tournante 1 par l'intermédiaire de la bague d'actionnement 7 lorsqu'elle est en appui sur le diaphragme. Pour ce faire, les zones d'appui 13a, 13b présentent un coefficient de friction dont la valeur est suffisante pour garantir la transmission de l'effort de rotation du diaphragme à la bague tournante 1, ledit coefficient pouvant être augmenté en prévoyant un matériau adapté et/ou un traitement de surface pour lesdites zones.

Les zones avant d'appui 13a sont agencées pour permettre un basculement de la portée d'actionnement 7a par rapport à l'anneau 13 dans un premier plan axial P1, les zones arrière d'appui 13b étant agencées pour permettre un basculement de l'anneau 13 par rapport à la portée avant 1 a dans un deuxième plan axial P2 qui est perpendiculaire au premier plan P1. Dans les modes de réalisation représentés, deux zones avant d'appui 13a sont décalées de 90° par rapport à deux zones arrière d'appui 13b.

En cas de désalignement entre la butée et le diaphragme, la combinaison de ces deux basculements permet un rotulage de la bague d'actionnement 7 par rapport à la bague tournante 1 lors de la mise en appui de la portée d'actionnement 7a sur le diaphragme. En particulier, la fonction de rotulage ainsi réalisée ne génère pas de pressions de contact trop importantes entre les corps roulants 3 et les bagues 1, 2 pour ne pas pénaliser la durée de vie de la butée, ce qui permet de faire fonctionner la partie roulement de la butée dans des conditions proches de celles des butées actuellement en série.

Dans les modes de réalisation représentés, les zones avant 13a - respectivement arrière 13b - d'appui sont disposées en regard axial de zones arrière 13c - respectivement avant 13d - en retrait qui sont formées sur l'anneau 13. Plus précisément, chaque face de l'anneau 13 présente une succession angulaire de zones convexes d'appui 13a, 13b et de zones concaves en retrait 13c, 13d. Ainsi, les zones en retrait 13c, 13d n'étant pas en appui sur respectivement la portée avant 1 a et la portée d'actionnement 7a, elles autorisent le basculement autour des zones d'appui 13a, 13b qui leur sont adjacentes.

En outre, l'anneau 13 peut se déformer axialement de façon élastique afin d'améliorer la filtration des efforts transmis par l'intermédiaire de la butée, notamment des vibrations et des oscillations, ainsi que l'amortissement des efforts, notamment relativement aux chocs entre la portée d'actionnement 7a et le diaphragme.

Afin de faciliter la réalisation de l'anneau 13, les figures représentent un anneau 13 formé de deux rondelles 14, 15 qui sont associées entre elles, les zones avant d'appui 13a étant formées sur une rondelle avant 14 et les zones arrière d'appui 13b étant formées sur une rondelle arrière 15. En variante, l'anneau 13 peut être réalisé en une seule pièce présentant les zones d'appui 13a, 13b sur chacune de ses faces.

De façon avantageuse, les rondelles 14, 15 présentent une géométrie identique, lesdites rondelles étant décalées angulairement pour former l'anneau 13. Par ailleurs, les rondelles 14, 15 comprennent des crochets extérieurs 16 d'association réciproque, lesdits crochets étant formés sur la périphérie extérieure de chacune des rondelles 14, 15 pour rigidifier l'anneau 13.

## Revendications

1. Butée d'embrayage de véhicule automobile comprenant une bague tournante (1) et une bague fixe (2) pourvues chacune d'une piste de roulement formant entre elles un chemin de roulement à contact oblique dans lequel des corps roulants (3) sont disposés pour guider la rotation de ladite bague tournante, ladite butée comprenant en outre une bague d'actionnement (7) qui présente une portée annulaire radiale d'actionnement (7a) qui est agencée pour permettre sa mise en appui axial sur le diaphragme de l'embrayage afin d'actionner ledit diaphragme par l'intermédiaire de ladite bague d'actionnement, la bague tournante (1) présentant une portée annulaire avant (1a) par rapport à laquelle la bague d'actionnement (7) est montée en permettant un rotulage de ladite portée d'actionnement par rapport à ladite portée avant, ladite butée étant **caractérisée en ce qu'**elle comprend un anneau (13) interposé entre la portée d'actionnement (7a) et la portée avant (1a), ledit anneau présentant des zones avant (13a) en appui sur la portée d'actionnement (7a), lesdites zones avant d'appui étant agencées pour permettre un basculement de la portée d'actionnement (7a) par rapport à l'anneau (13) dans un premier plan axial (P1), ledit anneau présentant également des zones arrière (13b) en appui sur la portée avant (1a), lesdites zones arrière d'appui étant agencées pour permettre un basculement de l'anneau (13) par rapport à la portée avant (1a) dans un deuxième plan axial (P2) qui est perpendiculaire au premier plan (P1), afin de permettre un rotulage de la bague d'actionnement (7) par rapport à la bague tournante (1) lors de la mise en appui de la portée d'actionnement (7a) sur le diaphragme.

2. Butée d'embrayage selon la revendication 1, **caractérisée en ce qu'**un jeu annulaire axial est formé entre la portée d'actionnement (7a) et la portée avant (1 a), l'anneau (13) étant disposé dans ledit jeu axial.

3. Butée d'embrayage selon la revendication 1 ou 2, **caractérisée en ce que** la portée avant (1a) s'étend radialement en délimitant un alésage (9) dans lequel une portée annulaire axiale (7b) de la bague d'actionnement (7) est montée, le diamètre de l'alésage (9) étant supérieur au diamètre extérieur de ladite portée axiale pour permettre le rotulage de la portée d'actionnement (7a) par rapport à la portée avant (1a).

4. Butée d'embrayage selon la revendication 3, **caractérisée en ce que** l'extrémité arrière de la portée axiale (7b) présente des crochets extérieurs (10) de montage de la bague d'actionnement (7) dans l'alésage (9).

5. Butée d'embrayage selon la revendication 4, **caractérisée en ce que** l'alésage (9) de la portée avant (1a) présente des encoches (12) correspondantes aux crochets (10) pour permettre le montage de la bague d'actionnement (7) par passage desdits crochets au travers desdites encoches, un jonc (11) étant interposé entre lesdits crochets et la portée avant (1a) pour empêcher le démontage de la bague d'actionnement (7).

6. Butée d'embrayage selon la revendication 5, **caractérisée en ce que** la portée axiale (7b) présente un épaulement (7c) de centrage de l'anneau (13).

7. Butée d'embrayage selon la revendication 4, **caractérisée en ce que** les crochets (10) sont disposés dans le prolongement axial de la portée axiale (7b) pour être rabattus derrière la portée avant (1 a) après montage de l'ensemble bague d'actionnement (7) - anneau (13) sur la bague tournante (1).

8. Butée d'embrayage selon l'une quelconque des revendications 1 à 7, **caractérisée en ce que** deux zones avant d'appui (13a) sont décalées de 90° par rapport à deux zones arrière d'appui (13b).

9. Butée d'embrayage selon l'une quelconque des revendications 1 à 8, **caractérisée en ce que** les zones avant (13a) - respectivement arrière (13b) - d'appui sont disposées en regard axial de zones arrière (13c) - respectivement avant (13d) - en retrait qui sont formées sur l'anneau (13).

10. Butée d'embrayage selon la revendication 9, **caractérisée en ce que** chaque face de l'anneau (13) présente une succession angulaire de zones convexes d'appui (13a, 13b) et de zones concaves en retrait (13c, 13d).

11. Butée d'embrayage selon l'une quelconque des revendications 1 à 10, **caractérisée en ce que** l'anneau (13) est formé de deux rondelles (14, 15) qui sont associées entre elles, les zones avant d'appui (13a) étant formées sur une rondelle avant (14) et les zones arrière d'appui (13b) étant formées sur une rondelle arrière (15).

12. Butée d'embrayage selon la revendication 11, **caractérisée en ce que** les rondelles (14, 15) présentent une géométrie identique, lesdites rondelles étant décalées angulairement pour former l'anneau (13).

13. Butée d'embrayage selon la revendication 11 ou 12, **caractérisée en ce que** les rondelles (14, 15) comprennent des crochets extérieurs (16) d'association réciproque.

14. Butée d'embrayage selon l'une quelconque des revendications 1 à 13, **caractérisée en ce que** la portée d'actionnement (7a) est équipée d'un disque d'appui sur le diaphragme, ledit disque étant réalisé en un matériau optimisant l'usure et réduisant le frottement.

15. Système d'actionnement de l'embrayage d'un véhicule automobile comprenant un diaphragme, ledit système comprenant une butée selon l'une quelconque des revendications 1 à 14 et un dispositif de déplacement axial de ladite butée entre une position d'embrayage dans laquelle la portée d'actionnement (7a) est disposée contre le diaphragme et une position de débrayage dans laquelle ladite portée d'actionnement appuie sur ledit diaphragme.
